# EUROPEAN PATENT SPECIFICATION

(11) **EP 2 248 741 B1**
(45) Date of publication and mention of the grant of the patent: **24.10.2012**
(21) Application number: 10161884.1
(22) Date of filing: 04.05.2010
(51) Int. Cl.: B65G 17/06, B65G 21/18, B65G 17/08

(54) **Link of a side chain for conveyor belts**
Glied einer Seitenkette für Förderbänder
Liaison d'une chaîne latérale pour courroies de transport

(30) Priority: 08.05.2009 IT PD20090126
(43) Date of publication of application: 10.11.2010
(73) Proprietor: Alit S.r.l., Frazione, Marsango PD 35010 Campo San Martino (IT)
(72) Inventor: Rettore, Michele, 35010, SAN GIORGIO DELLE PERTICHE PD (IT); Infanti, Nicola, 35016, TOMBOLO PD (IT)
(74) Representative: Modiano, Micaela Nadia

(56) References cited:
- US-A- 5 954 187
- US-A1- 2004 011 627
- US-A1- 2005 067 259
- US-A1- 2007 175 738

## Description

The present invention relates to a link of a side chain for conveyor belts, according to the preamble of claim 1.

Links of side chain for conveyor belts, particularly for food, are currently known which are constituted by a substantially U-shaped body made of metal plate in which the front portion is shaped so as to fit between the two facing end parts of the rear portion of a facing identical link.

The front portion has two symmetrical and longitudinally extended slots for the passage and translational motion of an end portion of a rod-like element of the conveyor belt to which the chain link belongs.

The rear portion has, on each end part, a hole for the insertion of an end portion of an additional rod-like element.

The external rear end part has a lateral tab that is contoured for engagement with a wheel or belt provided with teeth of associated driving means.

In known types of link, this external lateral tab is constituted by a flap of metal plate which is folded and extends from the rear edge of the external end part and again to the rear beyond such rear edge.

An L-shaped tipping preventing element is then typically associated from the side of the link that is directed toward the conveyor belt and its horizontal portion is designed to slide below a guide of the conveyor belt.

When the lateral tab interacts with the tooth of the wheel or belt provided with teeth of the driving means, the thrust generated by the tooth of the wheel or belt provided with teeth produces a torque between the region of contact between the tooth and the tab and the region of contact of the tipping preventing shoulder with the corresponding guide, and such torque tends to impose a momentary rotation to the rod-like element of the belt that is jointly connected to the actuated link.

The sequential occurrence of these events determines the characteristic oscillation of the rod-like elements that compose the belt at the driving means, an oscillation which can lead to unwanted stress on the conveyed food product.

US 2005/067259 A1 discloses a link of a conveyor chain having a combination of features as set forth in the pre-characterizing portion of the appended claim 1.

The aim of the present invention is to provide a link of a side chain for conveyor belts that improves the smoothness of the transmission of motion from the driving means to the belt, thus improving the stability of the conveyed products and ensuring greater integrity thereof.

Within this aim, an object of the invention is to provide a link of a side chain for conveyor belts that is simple to provide, like known types of link.

Another object of the invention is to provide a link that is also capable of speeding up the assembly of the conveyor belt to which it belongs.

A further object of the invention is to provide a link that allows to provide conveyor belts that can be guided upward or downward with guiding toothed wheels that have a smaller diameter than the known art, with a significant improvement in the quality of the transfer of small products.

Another object of the invention is to provide a link that allows to form a chain that can be driven by means of toothed wheels laterally, from above and from below with known types of driving means.

Another object of the invention is to provide a link of a side chain for conveyor belts that is structurally simple, is easy to use, and can be manufactured with low costs with known systems and technologies.

In accordance with the invention, there is provided a link of a side chain for conveyor belts as defined in the appended claims.

Further characteristics and advantages of the invention will become better apparent from the following detailed description of a link of a side chain for conveyor belts, particularly for food, according to the invention, illustrated by way of non-limiting example in the accompanying drawings, wherein:
Figure 1 is a first perspective view of a link useful for understanding the present invention;
Figure 2 is a second perspective view of the link of Figure 1;
Figure 3 is a plan view of a conveyor belt provided by means of links according to figures 1 and 2;
Figure 4 is a first perspective view of a link according to the invention ;
Figure 5 is a second perspective view of the link of Figure 4;
Figure 6 is a perspective view of a first embodiment of a conveyor belt provided by means of links of the invention;
Figure 7 is an exploded perspective view of a second embodiment of a conveyor belt provided by means of links of the invention;
Figures 8 and 9 are views of a guiding element of a conveyor belt provided by means of links of the invention;
Figure 10 is a plan view of a conveyor belt provided by means of links of the invention.

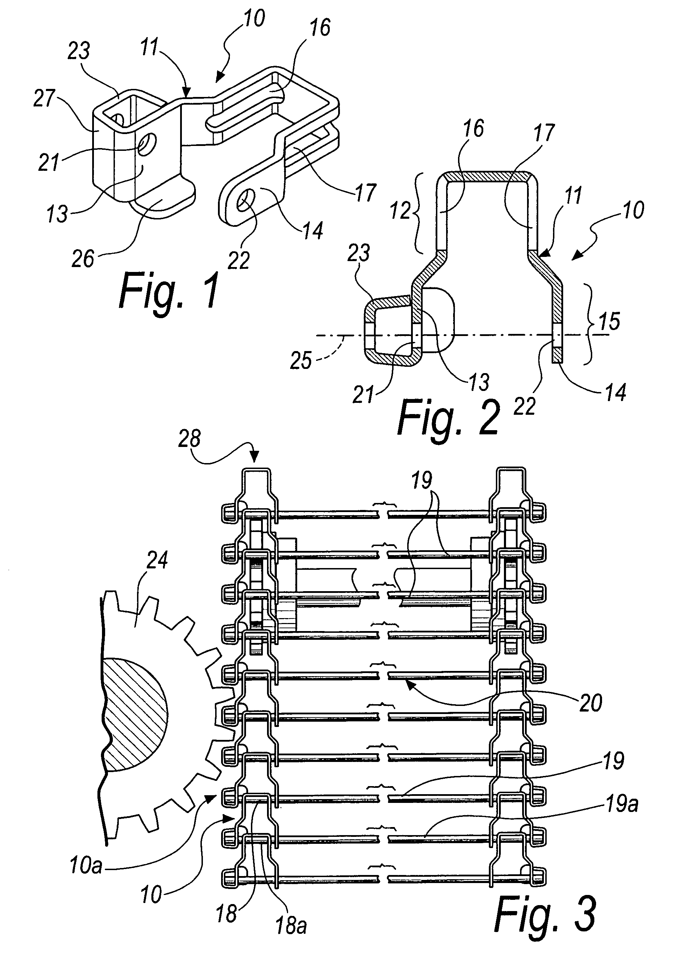

With reference to the figures, a link of a side chain for conveyor belts, particularly for food, is generally designated by the reference numeral 10 , which is visible in Figures 1, 2 and 3.

The link 10 is of the type that comprises a substantially V-shaped body 11, with the front portion 12 shaped so as to fit between the two facing end parts 13 and 14 of the rear portion 15 of an identical link 10a arranged in front.

The front portion 12 has two longitudinally elongated symmetrical slots 16 and 17 for the passage and translational motion of an end portion 18 of a rod-like element 19 of a conveyor belt 20.

The rear portion 15 has, on each end part 13 and 14, a hole, respectively 21 and 22, for the insertion of an end portion 18a of an additional rod-like element 19a, as exemplified in Figure 3.

The outer rear end part 13 has a lateral tab 23 that is contoured to mesh with a toothed wheel 24, but it might be a toothed belt, of associated driving means, of a per se known type, which are not shown for the sake of simplicity.

The lateral tab 23 is formed, on the outer rear end part 13, so that it is crossed by the axis of the holes 25 for the rod-like element 19a.

A tipping preventing shoulder 26 extends from the lower edge of the outer rear end part 13 and is designed to slide below a corresponding guide, which is to be understood as known, is not shown for the sake of simplicity and is associated with the conveyor belt 20.

The link 10 is made of metal plate.

The lateral tab 23 is provided by a flap 27 of metal plate, which extends from the outer end part 13 and is folded externally in a C-shaped configuration and so as to affect the axis 25 of the holes 21 and 22, as clearly shown in Figures 1 and 2.

The lateral tab 23, which differently from known links does not extend to the rear in a cantilever fashion, is stronger, allowing more stable and precise meshing of a chain 28, provided by means of a series of identical links 10, with the toothed wheel 24 of the driving means.

Further, the tipping preventing shoulder 26, which is incorporated in the link 10, allows to save a component to be assembled.

Moreover, such tipping preventing shoulder, being formed on the outer rear end part 13 at, and very close to, the lateral tab 23, is such that, when the lateral tab 23 interacts with a tooth of the toothed wheel 24 of the driving means, the thrust generated by the tooth of the toothed wheel, which might likewise also be a toothed belt, produces no torque between the region of contact between the tooth and the tab and the region of contact of the tipping preventing shoulder 26 with its guide, or a torque that is very modest with respect to what can be obtained with known links, with the corresponding guide.

This severe limitation or complete lack of the described torque produces a proportional strong limitation or elimination of the oscillations of the rod-like elements 19 and 19a of the belt 20, thus obtaining greater stability and integrity of the conveyed products during the passage of the belt at the driving means.

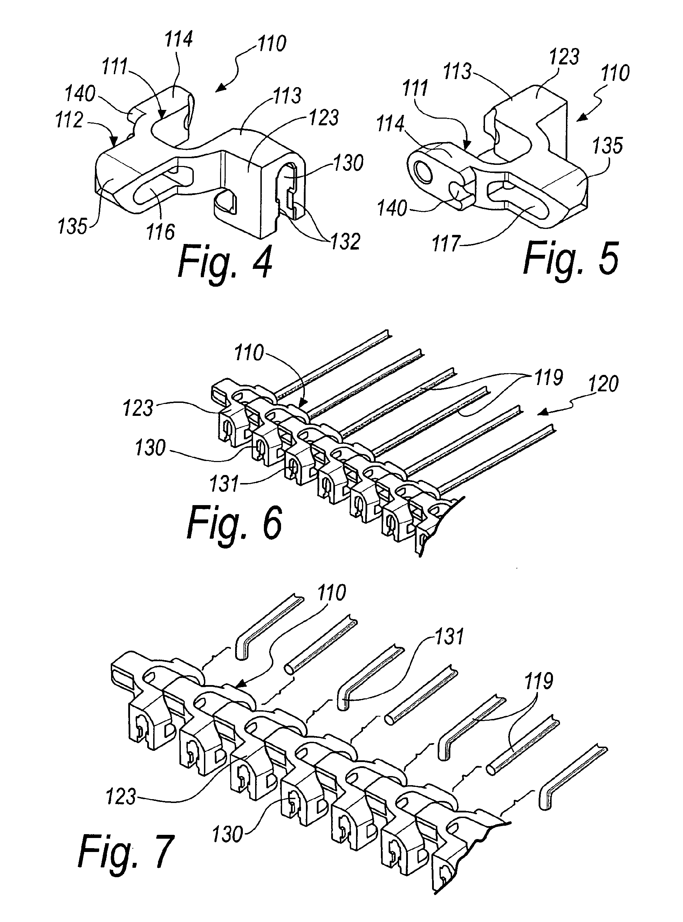

The link according to the invention, illustrated in particular in Figures 4 and 5 and designated therein by the reference numeral 110, is provided monolithically and made of plastics.

In the link 110, the lateral tab 123 extends toward the outside of the outer end part 113 and has a seat 130 for the rapid engagement of a complementarily shaped end 131 of a rod-like element 119 of the conveyor belt 120.

The seat 130 is open laterally onto the outside of the tab 123 and has protruding edges 132 for the snap engagement of the L-folded end 131 of a rod-like element 119.

The link 110 thus allows to provide a conveyor belt 120 with rod-like elements that have both ends 131 folded into an L-shaped configuration for engagement with the corresponding seats 130 on the lateral tabs 123, as shown in Figure 6, or a similar conveyor belt whose rod-like elements 119 have a single L-folded end 131, as shown in Figure 7, since it is sufficient in practice to fix just one of the two ends of the rod-like element in order to stabilize its position also with respect to the opposite associated link 110.

In such embodiment of Figure 7, the belt 120 is much faster and cheaper to provide.

Further, by adopting chains composed of the links 110, it is also much simpler to join two pieces of conveyor belt 120 and the operation for closing the belt 120, without resorting to welding or other mechanical operations with the addition of mechanical elements, is also much easier and faster.

In the invention of the link 110, which is monolithic and made of plastics, the front portion 112 has two slots 116 and 117, which are the lateral ports of a single through opening that is formed transversely to the front portion 112.

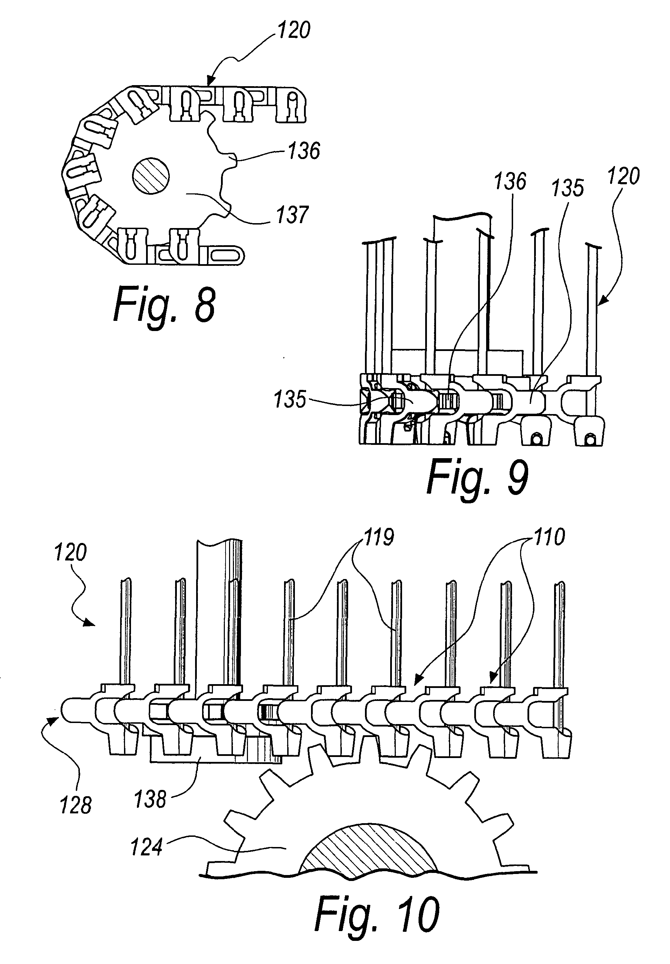

The tip 135 of the front portion 112 of the V-shaped body 111 has a profile shaped substantially like involutes of a circle, so as to better interact with the teeth 136 of a toothed wheel 137 for guiding the conveyor belt 120 upward, as shown in Figures 8 and 9, or downward.

The particular shaping of the V-shaped body 111 also allows to provide conveyor belts 120 in which the diameter of the guiding wheels is smaller than in similar belts with links of the known type, thus improving the transfer of small products from the belt 122 to another belt or to another subsequent platform.

The link 110, as clearly visible in Figure 10, allows to provide chains 128 which can be driven easily either by means of a lateral toothed belt or wheel 124 or by means of a toothed belt or wheel 138 arranged above or below the chain 128.

The link 110, as shown in Figure 5, has, on the inner face of the inner rear end part 114, a C-shaped seat 140 for the engagement of an end of a second rod-like element to be arranged laterally parallel to the first element 119 to provide a conveyor belt with a double number of rod-like elements.

The fitting of a second bar can be performed easily, conveniently and quickly even if the belt 120 is already assembled.

In practice it has been found that the invention achieves the intended aim and objects.

In particular, the present invention provides a link for a side strain for conveyor belts that improves the smoothness of the transmission of motion from the driving means to the belt, thus improving stability and ensuring greater integrity of the conveyed products.

Moreover, the invention provides a link of a side chain for conveyor belts that is simple to provide, for example made of metallic plate, like links of the known type.

Moreover, the invention provides a link that is also capable of providing swifter assembly of the conveyor belt to which it belongs, for example in the embodiment made of plastics exemplified above, which is provided with a seat for rapid snap engagement of a contoured end of an associated rod-like element of the belt.

Moreover, the invention provides a link that allows to provide conveyor belts that can be guided upward or downward with guiding toothed wheels that have a smaller diameter than the known art, with a significant improvement in the quality of the transfer of small products.

The link according to the invention further allows to define a chain that can be driven by means of toothed wheels laterally, from above and from below with known types of driving means.

Further, with such a link it is possible to provide conveyor belts for drum-type spirals, even of a known type.

Moreover, the present invention provides a link of a side chain for conveyor belts that is structurally simple, easy to use, and can be manufactured at low costs with known systems and technologies.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A link (110) of a side chain for conveyor belts, particularly for food, of the type comprising a substantially V-shaped body (111), with the front portion (112) shaped so as to fit between the two facing end parts (113, 114) of the rear portion (115) of an identical link arranged in front, said front portion having two longitudinally elongated symmetrical slots (116, 117) for the passage and translational motion of an end portion of a rod-like element (119) of a conveyor belt (120), said rear portion (115) having, on each of said end parts (113, 114), a hole for the insertion of an end portion of an additional rod-like element, the outer rear end part (113) having a lateral tab (123) that is contoured to mesh with a wheel or belt provided with teeth of associated driving means, said lateral tab (123) being formed, on said outer rear end part (113), so that it is crossed by the axis of the holes for said rod-like element (119), said link being made monolithically of plastics, and said lateral tab (123) extending toward the outside of said outer end part (113) and having a seat (130) for the rapid engagement of a complementarily shaped end (131) of a rod-like element (119) of the conveyor belt (120), the link being **characterized in that** said seat (130) is open laterally on the outside of said tab (123) and has protruding edges (132) for the snap engagement of the L-folded end (131) of a rod-like element (119).

2. The link according to claim 1, **characterized in that** a tip (135) of the front portion (112) of the V-shaped body (111) has a profile substantially formed by involutes of a circle.

3. The link according to claim 1, **characterized in that** it has, on the internal face of the inner rear end part (114), a C-shaped seat (140) for the engagement of an end of a second rod-like element to be arranged laterally adjacent and parallel to the first rod-like element (119), to provide a conveyor belt with a double number of rod-like elements.

## Patentansprüche

1. Ein Glied (110) einer Seitenkette für Förderbänder, insbesondere für Lebensmittel, von der Art, die einen im Wesentlichen V-förmigen Körper (111) umfasst, wobei der vordere Abschnitt (112) so geformt ist, dass er zwischen die zwei gegenüberliegenden Endteile (113, 114) des hinteren Abschnitts (115) eines identischen Glieds passt, das vorne angeordnet ist, wobei der vordere Abschnitt zwei in Längsrichtung verlängerte symmetrische Schlitze (116, 117) für das Hindurchdringen und die Translationsbewegung eines Endabschnitts eines stabähnlichen Elements (119) eines Förderbandes (120) hat und der hintere Abschnitt (115) an jedem der Endteile (113, 114) ein Loch für das Einsetzen eines Endabschnitts eines zusätzlichen stabähnlichen Elements hat, wobei das äußere hintere Endteil (113) einen seitlichen Dorn (123) hat, der eine Kontur hat, um in ein Rad oder einen Riemen einzugreifen, das/der mit Zähnen dazugehöriger Antriebsmittel ausgestattet ist, wobei der seitliche Dorn (123) an dem äußeren hinteren Endteil (113) so geformt ist, dass er von der Achse der Löcher für das stabähnliche Element (119) gekreuzt wird, wobei das Glied monolithisch aus Kunststoff hergestellt ist und der seitliche Dorn (123) sich zur Außenseite des äußeren Endteils (113) erstreckt und einen Sitz (130) für den schnellen Eingriff eines komplementär geformten Endes (131) eines stabähnlichen Elements (119) des Förderbandes (120) hat, wobei das Glied **dadurch gekennzeichnet ist, dass** der Sitz (130) seitlich an der Außenseite des Dorns (123) offen ist und vorstehende Kanten (132) für die Schnappverbindung des L-förmigen Endes (131) eines stabähnlichen Elements (119) hat.

2. Das Glied gemäß Anspruch 1, **dadurch gekennzeichnet, dass** eine Spitze (135) des vorderen Abschnitts (112) des V-förmigen Körpers (111) ein Profil hat, das im Wesentlichen von Evolventen eines Kreises geformt wird.

3. Das Glied gemäß Anspruch 1, **dadurch gekennzeichnet, dass** es an der Innenfläche des inneren hinteren Endteils (114) einen C-förmigen Sitz (140) für das Eingreifen eines Endes eines zweiten stabähnlichen Elements hat, seitlich angrenzend an und parallel zum ersten stabähnlichen Element (119) anzuordnen, um ein Förderband mit einer doppelten Anzahl stabähnlicher Elemente auszustatten.

## Revendications

1. Maillon (110) d'une chaîne latérale pour les courroies transporteuses, en particulier celles destinées aux produits alimentaires, du type comprenant un corps essentiellement en forme de V (111), avec la partie avant (112) mise en forme de manière à s'ajuster entre les deux parties d'extrémité opposées (113, 114) de la partie arrière (115) d'un maillon identique agencé en avant, ladite partie avant ayant deux fentes symétriques (116, 117) longitudinalement allongées pour permettre le passage et le mouvement de translation d'une partie d'extrémité d'un élément en forme de tige (119) d'une courroie transporteuse (120), ladite partie arrière (115) ayant, sur chacune desdites parties d'extrémité (113, 114), un trou pour l'insertion d'une partie d'extrémité d'un élément en forme de tige supplémentaire, la partie (113) d'extrémité arrière extérieure ayant une languette latérale (123) qui est profilée de manière à s'engrener avec une roue ou une courroie pourvue de dents d'un moyen d'entraînement associé, ladite languette latérale (123) étant formée, sur ladite partie (113) d'extrémité arrière extérieure, de sorte qu'elle soit traversée par l'axe des trous pour ledit élément en forme de tige (119), ledit maillon étant réalisé de manière monolithique en matière plastique, et ladite languette latérale (123) s'étendant vers l'extérieur de ladite partie d'extrémité extérieure (113) et ayant un siège (130) pour l'engagement rapide d'une extrémité de forme complémentaire (131) d'un élément en forme de tige (119) de la courroie transporteuse (120), le maillon étant **caractérisé en ce que** ledit siège (130) est ouvert latéralement sur l'extérieur de ladite languette (123) et a des bords en saillie (132) pour l'engagement par encliquetage de l'extrémité pliée en L (131) d'un élément en forme de tige (119).

2. Maillon selon la revendication 1, **caractérisé en ce qu'**une pointe (135) de la partie avant (112) du corps en forme de V (111) présente un profil essentiellement en forme de développantes d'un cercle.

3. Maillon selon la revendication 1, **caractérisé en ce qu'**il comporte, sur la face interne de la partie (114) d'extrémité arrière intérieure, un siège en forme de C (140) pour l'engagement d'une extrémité d'un deuxième élément en forme de tige devant être disposé latéralement en étant adjacent et parallèle au premier élément en forme de tige (119), pour fournir une courroie transporteuse ayant un nombre double d'éléments en forme de tige.
